# DEMANDE DE BREVET EUROPEEN

(11) **EP 0 619 632 A1**
(43) Date de publication de la demande: **12.10.1994**
(21) Numéro de dépôt: 94400715.2
(22) Date de dépôt: 01.04.1994
(51) Int. Cl.: H02B 1/42

(54) **Appareil électrique destiné à être fixé à un support**

(30) Priorité: 05.04.1993 FR 9303969
(71) Demandeur: PLANET-WATTOHM, F-60300 Senlis (FR)
(72) Inventeur: Laigle, Jean, F-93700 Drancy (FR); Coutant, Régis, F-60117 Vauciennes (FR)
(74) Mandataire: CABINET BONNET-THIRION

(57) **Abrégé**

Appareil électrique à montage rapide.

Selon l'invention, l'appareil comporte un socle (11) et un capot (12) respectivement munis de pattes (30, 32) venant s'imbriquer côte à côte au montage pour permettre la mise en place d'une pièce de verrouillage (40).

## Description

L'invention concerne un appareil électrique destiné à être fixé à un support, par exemple une paroi et comprenant notamment un socle, plus particulièrement destiné à être fixé audit support et un capot venant se monter sur ledit socle; l'invention concerne plus particulièrement un agencement d'assemblage rapide entre le capot et le socle.

Un appareil électrique du genre défini ci-dessus est classiquement constitué:
- d'un socle fixé à un support, par exemple un mur et comportant pour ce faire, des trous permettant le passage de vis de fixation,
- d'un dispositif électrique tel que interrupteur, voyant lumineux, prise électrique, prise de téléphone, prise de télévision, etc... venant se fixer sur le socle ou pouvant former un seul ensemble avec celui-ci et,
- un capot extérieur, en une ou plusieurs parties, venant se fixer sur le socle pour protéger le dispositif électrique.

Généralement, le capot est fixé au socle par vissage.

L'invention permet de réduire le temps de montage en supprimant le vissage du capot sur le socle. Pour ce faire, l'invention prévoit de verrouiller le capot sur le socle, grâce à l'insertion d'une pièce spécifique qui, en une seule manoeuvre, permet de solidariser le capot et le socle et de les maintenir assemblés par des liaisons de forme.

Plus précisément, l'invention concerne un appareil électrique comportant notamment un socle destiné à être fixé à un support et un capot venant se monter sur ledit socle, caractérisé en ce que ledit socle et ledit capot sont pourvus de pattes destinées à s'imbriquer côte à côte au montage, lesdites pattes comportant des surfaces de butée propres à se placer respectivement sensiblement dans deux plans distincts au montage dudit capot sur ledit socle, définissant au moins un espace d'insertion et en ce qu'il comporte au moins une pièce de verrouillage conformée et dimensionnée pour être insérée dans un tel espace d'insertion entre les surfaces de butée desdites pattes imbriquées.

Selon un mode de réalisation préféré, ladite pièce de verrouillage a la forme d'un cavalier comportant deux branches sensiblement parallèles propres à prendre place dans deux espaces d'insertion précités, définis de chaque côté du socle et du capot en position d'assemblage.

Dans le cas d'un boîtier au moins approximativement en forme de parallélépipède rectangle, le cavalier peut avoir sensiblement la forme d'un U. Son contour extérieur peut être semblable à celui d'une partie du bord arrière du capot de sorte que, après montage, ledit cavalier semble faire partie intégrante du capot.

Au-delà de sa fonction mécanique, le cavalier peut aussi avoir un rôle esthétique par exemple en raison de sa forme, ses dimensions, sa couleur ou le matériau dans lequel il est constitué.

L'invention sera mieux comprise et d'autres avantages de celle-ci apparaîtront plus clairement à la lumière de la description qui va suivre d'un mode de réalisation actuellement préféré d'un appareil électrique conforme à son principe, donnée uniquement à titre d'exemple et faite en référence aux dessins annexés dans lesquels:
- la figure 1 est une vue arrière en perspective éclatée montrant les différents éléments constitutifs de l'appareil électrique;
- la figure 2 est une vue arrière en perspective, analogue à la figure 1 mais dans laquelle le socle et le capot sont déjà en position d'assemblage; et
- la figure 3 est une vue avant en perspective éclatée des éléments constitutifs de l'appareil électrique.

L'appareil électrique représenté comporte notamment un socle 11 destiné à être fixé à un support, généralement une paroi et un capot 12 venant se monter sur le socle. Ce socle se compose essentiellement d'une platine 14 généralement plane dont la face arrière constitue un plan de fixation 14a destiné à être appliqué contre ledit support et de deux colonnettes 15 faisant saillie de la face avant de la platine. Ces colonnettes munies de trous axiaux 15a permettent le montage d'un dispositif électrique quelconque qui n'a pas été représenté, pour ne pas surcharger les dessins. La platine 14 du socle est munie de trous 16 permettant sa fixation au moyen de vis. Dans l'exemple, la platine est prolongée sur un côté par un cache 18 destiné à venir s'appliquer devant une gaine de passage de fils à plusieurs compartiments. Ce cache comporte des empreintes de prédécoupage 19 permettant d'y définir des trous de passage pour de tels fils. Lorsqu'on extrait un de ces fils de l'un des compartiments pour le raccorder à l'appareil fixé au socle, il se trouve isolé des autres fils, situés dans les autres compartiments, par le cache 18.

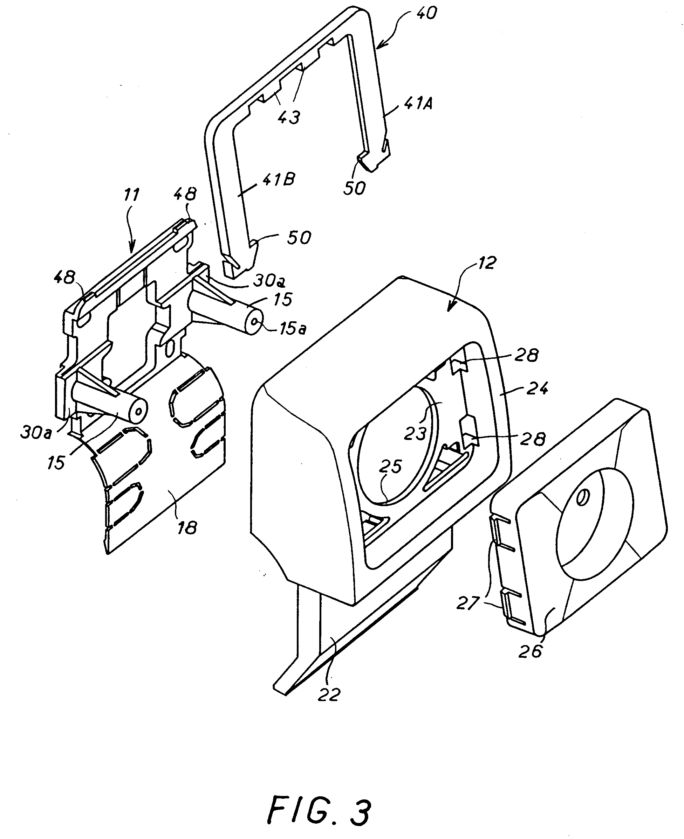

Le capot 12 a une forme générale de parallélépipède rectangle bien que ses arêtes soient arrondies dans l'exemple représenté. Il présente un bord arrière 20 en forme de U donnant accès à une cavité 21 où prendra place le dispositif électrique. Comme pour le socle, l'un des côtés du capot est prolongé par un cache 22 qui vient se superposer à celui du socle pour masquer les fils électriques apparents. Le capot comporte un voile 23 en retrait par rapport à sa face avant 24 (figure 3). Ce voile est percé d'un trou 25 pour que l'appareil électrique soit visible ou accessible. L'espace ménagé entre la face avant 24 du capot et ce voile 23 est occupé par un enjoliveur 26 qui, dans l'exemple, forme le puits d'une prise de courant. Cet enjoliveur comporte des dents 27 sur ses côtés, permettant un montage par simple encliquetage dans des ouvertures 28 adaptées, ménagées à la périphérie du voile.

Tous les éléments qui viennent d'être décrits sont ici en matière plastique moulée.

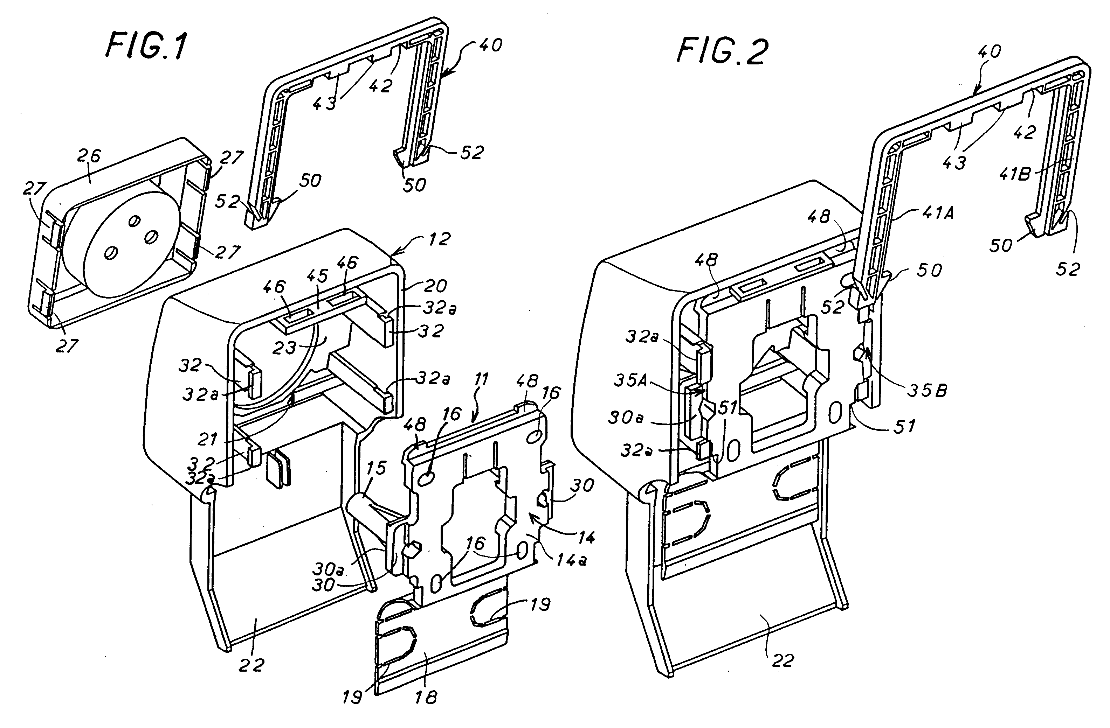

Selon une caractéristique de l'invention, le socle 11 et le capot 12 sont pourvus de pattes 30, 32, respectivement, agencées en au moins deux emplacements opposés (dans l'exemple, le long de deux côtés opposés sensiblement parallèles) et destinées à s'imbriquer côte à côte, en quinconce, au montage. Les pattes 32 du capot ont sensiblement la forme de crochets faisant saillie au-delà du bord arrière 20 de celui-ci. Les pattes 30 du socle font partie de la platine 14 et font saillie latéralement de part et d'autre de celle-ci, au voisinage des colonnettes 15. Ces pattes définissent ainsi des surfaces de butée 30a, 32a propres à se placer respectivement sensiblement dans deux plans distincts, ici parallèles, au montage dudit capot sur ledit socle. Les positions respectives des pattes du socle et du capot et par conséquent de leurs surfaces de butée respectives sont visibles sur la figure 2. On voit que lesdites surfaces de butée définissent entre elles deux espaces d'insertion 35_{A}, 35_{B} situés respectivement le long de deux côtés opposés de l'appareil électrique. Chacun de ces espaces d'insertion est apte à recevoir une pièce de verrouillage conformée et dimensionnée pour y être insérée et venir en appui entre lesdites surfaces de butée 30a, 32a desdites pattes imbriquées.

Dans l'exemple représenté, la pièce de verrouillage 40 est commune aux deux espaces d'insertion 35_{A}, 35_{B} opposés; elle a la forme d'un cavalier comportant deux branches 41_{A}, 41_{B} sensiblement parallèles, propres à prendre place dans les deux espaces d'insertion 35_{A}, 35_{B}, respectivement. Ici, le cavalier a sensiblement la forme d'un U. Il est ici en matière plastique moulée. Son contour extérieur est ici semblable au bord arrière 20 en forme de U du capot, de sorte que, après montage, le cavalier apparaît dans le prolongement arrière du capot et semble ne faire qu'une seule pièce avec lui.

Bien entendu, seule la forme intérieure du cavalier doit, dans l'exemple, avoir la forme d'un U. Le contour extérieur pourrait avoir une toute autre forme susceptible de donner un aspect esthétique particulier à l'appareil électrique.

Les liaisons de forme qui viennent d'être décrites sont en soi suffisantes pour assurer une fixation rapide et fiable du capot sur le socle. Elles sont cependant complétées par d'autres liaisons de forme qui vont maintenant être décrites.

En effet, le côté 42 du cavalier qui forme la base du U comporte deux dents 43 n'excédant pas son épaisseur et dirigées vers l'intérieur du U. Bien entendu, on pourrait prévoir une seule dent ou au contraire plus de deux. Le capot 12 comporte quant à lui une languette 45 faisant saillie le long du bord en U 20 de celui-ci et plus particulièrement le long de la base de ce U. Cette languette est décalée par rapport au bord arrière du capot et est munie de deux trous 46 conformés et dimensionnés pour accueillir les deux dents 43 du cavalier, respectivement. Par ailleurs, une partie du bord du socle, globalement parallèle au côté du cavalier qui forme la base du U, comporte d'autres pattes 48 décalées par rapport au plan de fixation 14a du socle. Elles sont ainsi conformées et positionnées pour pouvoir s'engager entièrement dans le capot 12 en position d'assemblage, comme le montre la figure 2. Ainsi, à la mise en place du cavalier, on assure un verrouillage supplémentaire du cavalier par rapport au socle grâce aux pattes 48 et du capot par rapport au cavalier, grâce à la languette 45 et aux dents 43 de ces éléments.

Comme représenté, les pattes 48 du socle se situent de part et d'autre de la languette 45 du capot, en position d'assemblage.

Par ailleurs, à chacune de ses extrémités, le cavalier comporte une dent 50 dirigée vers l'intérieur du U et coopérant en position de montage avec un épaulement 51 défini dans le pourtour dudit socle 11. Ces dents assurent le maintien définitif du cavalier, en fin de course d'assemblage par encliquetage de celui-ci le long du socle. A chacune de ses extrémités, le cavalier comporte cependant une fente 52 accessible de l'extérieur permettant d'écarter les branches du cavalier, pour démonter l'appareil.

La mise en oeuvre de l'appareil électrique découle avec évidence de la description qui précède. On commence par fixer le socle à une paroi, dans l'exemple plus particulièrement le long d'une gaine de passage de fils. Cette fixation s'opère au moyen de vis engagées dans les trous 16 du socle 11. Le dispositif électrique (ici une prise de courant) est ensuite monté, s'il ne l'est déjà, sur les colonnettes 15 de ce socle. L'électricien procède alors au raccordement électrique du dispositif et achève simplement le montage en emboîtant le capot 12, muni de l'enjoliveur 26, à la périphérie du socle, comme représenté à la figure 2 et en insérant la pièce de verrouillage à l'arrière dudit capot, dans les espaces 35_{A}, 35_{B}, jusqu'à ce que les dents 50 du cavalier viennent en prise avec les épaulements 51 correspondants du socle.

## Revendications

**1-** Appareil électrique comportant notamment un socle (11) destiné à être fixé à un support et un capot (12) venant se monter sur ledit socle, caractérisé en ce que ledit socle et ledit capot sont pourvus de pattes (30, 32) destinées à s'imbriquer côte à côte au montage, lesdites pattes comportant des surfaces de butée (30a, 32a) propres à se placer respectivement sensiblement dans deux plans distincts au montage dudit capot sur ledit socle, définissant au moins un espace d'insertion et en ce qu'il comporte au moins une pièce de verrouillage (40) conformée et dimensionnée pour être insérée dans un tel espace d'insertion entre les surfaces de butée desdites pattes imbriquées.

**2-** Appareil électrique selon la revendication 1, caractérisé en ce que les pattes (32) dudit capot (12) ont sensiblement la forme de crochets faisant saillie au-delà du bord arrière de celui-ci.

**3-** Appareil électrique selon la revendication 1 ou 2, caractérisé en ce que ladite pièce de verrouillage (40) a la forme d'un cavalier comportant deux branches (41_{A}, 41_{B}) sensiblement parallèles propres à prendre place dans deux espaces d'insertion (35_{A}, 35_{B}) précités définis de chaque côté du socle et du capot en position d'assemblage.

**4-** Appareil électrique selon la revendication 3, caractérisé en ce que le contour extérieur dudit cavalier est semblable à celui du bord arrière dudit capot.

**5-** Appareil électrique selon la revendication 3 ou 4, caractérisé en ce que ledit cavalier (40) a sensiblement la forme d'un U.

**6-** Appareil électrique selon la revendication 5, caractérisé en ce que le côté (42) dudit cavalier formant la base du U comporte au moins une dent (43) dirigée vers l'intérieur du U et en ce que ledit capot comporte une languette (45) faisant saillie le long du bord de celui-ci et munie d'un trou (46) conformé et dimensionné pour accueillir ladite dent.

**7-** Appareil électrique selon la revendication 5 ou 6, caractérisé en ce qu'une partie du bord dudit socle, globalement parallèle au côté du cavalier formant la base du U, comporte d'autres pattes (48) décalées par rapport au plan de fixation (14a) dudit socle et conformées pour s'engager entièrement dans ledit capot (12) en position d'assemblage, pour assurer un verrouillage supplémentaire à la mise en place dudit cavalier.

**8-** Appareil électrique selon l'ensemble des revendications 6 et 7, caractérisé en ce que lesdites autres pattes (48) se situent de part et d'autre de ladite languette, en position d'assemblage.

**9-** Appareil électrique selon l'une des revendications 2 à 8, caractérisé en ce que, à chacune de ses extrémités, ledit cavalier comporte une dent (50) dirigée vers l'intérieur et coopérant avec un épaulement (51) dudit socle.

**10-** Appareil électrique selon la revendication 9, caractérisé en ce que, à chacune de ses extrémités, ledit cavalier comporte une fente (52) accessible de l'extérieur, permettant d'écarter ledit cavalier pour le démontage.
